(19) **Europäisches Patentamt / European Patent Office / Office européen des brevets**

(11) **EP 1 436 792 B1**

(12) **FASCICULE DE BREVET EUROPEEN**

(45) Date de publication et mention
de la délivrance du brevet:
**21.11.2007 Bulletin 2007/47**

(21) Numéro de dépôt: **02790494.5**

(22) Date de dépôt: **10.09.2002**

(51) Int Cl.:
***G07F 7/12*** (2006.01)

(86) Numéro de dépôt international:
**PCT/FR2002/003081**

(87) Numéro de publication internationale:
**WO 2003/023725 (20.03.2003 Gazette 2003/12)**

(54) **PROTOCOLE D'AUTHENTIFICATION A VERIFICATION D'INTEGRITE DE MEMOIRE**

AUTHENTISIERUNGSPROTOKOLL MIT SPEICHERINTEGRITAETSVERIFIKATION

AUTHENTICATION PROTOCOL WITH MEMORY INTEGRITY VERIFICATION

(84) Etats contractants désignés:
**DE FR GB IT**

(30) Priorité: **10.09.2001 FR 0111678**

(43) Date de publication de la demande:
**14.07.2004 Bulletin 2004/29**

(73) Titulaire: **STMicroelectronics S.A.**
**92120 Montrouge (FR)**

(72) Inventeurs:
• **WUIDART, Luc**
**F-83910 Pourrières (FR)**
• **BALTHAZAR, Pierre**
**F-13100 Aix en Provence (FR)**

(74) Mandataire: **de Beaumont, Michel**
**Cabinet Michel de Beaumont**
**1, rue Champollion**
**38000 Grenoble (FR)**

(56) Documents cités:
**EP-A- 0 475 837          EP-A- 0 926 624**
**WO-A-96/10811          FR-A- 2 757 979**
**US-A- 4 786 790**

**Description**

La présente invention concerne l'authentification d'un circuit intégré ou dispositif électronique contenant un tel circuit, au moyen d'une procédure d'authentification ayant recours à une donnée ou quantité privée ou secrète contenue dans le circuit intégré.

L'invention concerne plus particulièrement les procédures d'authentification basées sur l'utilisation d'une quantité secrète (dite aussi clé ou donnée privée) au moyen d'un dispositif externe. Un exemple d'application de la présente invention est le domaine des cartes à puce qu'elles soient à unités de compte prépayées ou non.

Les divers procédés d'authentification d'une carte à puce ou analogue ont pour but d'éviter le piratage ou la falsification d'une carte, soit par l'utilisation d'un dispositif discret reproduisant la carte, soit par piratage d'un terminal de lecture, ou encore par reproduction à grande échelle de cartes à puce falsifiées.

Les procédés d'authentification les plus performants ont recours à une quantité privée présente dans le circuit intégré à authentifier, et à une quantité ou clé dite publique, dépendant de cette quantité privée et stockée dans un dispositif externe (généralement distinct du dispositif de lecture de la carte à puce). La quantité privée est mise en jeu de façon indirecte à chaque besoin d'authentification du circuit intégré, sans qu'il y ait "transfert de connaissances". Dans des procédés dits "sans transfert de connaissance" ou "Zero-Knowledge", l'authentification se déroule suivant un protocole qui, de façon prouvée, et sous des hypothèses reconnues comme parfaitement raisonnables par la communauté scientifique, ne révèle rien de la clé secrète ou quantité privée de l'entité dont la signature est à authentifier. Des exemples de procédés d'authentification connus auxquels s'applique la présente invention sont décrits dans la demande de brevet français n° 2 716 058 et dans le brevet américain n° 4 995 082.

Dans ces procédés, on n'envoie pas la quantité privée elle-même, mais un résultat de calcul prenant en compte cette quantité privée, un nombre fonction d'un nombre aléatoire choisi par le circuit intégré et communiqué au dispositif externe, et un nombre aléatoire choisi par le dispositif externe et communiqué à la carte. Le résultat est alors vérifié par le dispositif externe pour authentifier la carte. Cette vérification fait par ailleurs appel à des clés publiques qui sont le plus souvent certifiées par un autre dispositif (généralement appelé "tiers de confiance"). Dans une phase de personnalisation de la puce, celle-ci se calcule une clé publique qu'elle transmet, avec son identifiant, à un "tiers de confiance". Ce dernier calcule un certificat qu'il renvoie à la puce qui le stocke. En phase d'utilisation, la puce communique son identifiant et le certificat au lecteur. Le lecteur recalcule la clé publique de la puce à partir de ces deux valeurs et d'une clé publique du "tiers de confiance".

Si les procédés performants cachent la quantité privée lors des transferts, ils sont impuissants contre des piratages à l'intérieur du circuit intégré.

En particulier, les procédés et systèmes d'authentification classiques ne protègent pas les données contenues dans les éléments de mémorisation de la carte à puce ou analogue. Ces données peuvent être constituées de programmes de traitement (y compris le programme nécessaire à l'exécution du procédé d'authentification) ou de données diverses. Parmi les données stockées, par exemple dans des mémoires de type EEPROM, se trouve notamment la clé publique certifiée du "tiers de confiance" et permettant au lecteur de recalculer les clés publiques des puces.

Le fait que ces données et programmes ne soient pas protégés constitue une brèche dans la sécurité des systèmes à carte à puce. Cette fragilité est encore accrue par le fait que l'authentification s'effectue par la carte elle-même, donc à partir de ses programmes et des éléments accessibles de sa mémoire.

Un autre inconvénient des procédés d'authentification classiques est lié au recours à une quantité privée par ailleurs indispensable pour distinguer ou différencier des dispositifs ou sous-ensembles électroniques, par exemple des cartes à puce, les uns par rapport aux autres. Cet inconvénient est précisément que cette quantité constitue une donnée stockée dans le composant à identifier. Une telle quantité est par conséquent susceptible d'être piratée par examen de l'élément de stockage (par exemple, des registres ou analogue) de la carte à puce dans laquelle est stockée la quantité. De plus, la quantité privée est généralement immuable pour une carte à puce donnée, afin de permettre une authentification répétitive de celle-ci. Il en découle une fragilité de la fonction d'authentification.

La présente invention vise à améliorer les procédés et systèmes d'authentification de circuits intégrés ou analogues.

L'invention vise, plus particulièrement, à optimiser la sécurité anti-fraude des dispositifs électroniques ayant recours à un circuit intégré pourvu d'éléments de mémorisation de programme et/ou de données.

L'invention vise également à détecter et empêcher toute modification de quantités privées d'un circuit intégré.

Pour atteindre ces objets et d'autres, la présente invention prévoit un procédé de fourniture d'une quantité privée dans un circuit intégré participant à une procédure d'authentification au moyen d'un dispositif externe tenant compte de cette quantité privée qui est fonction d'une signature d'au moins une mémoire associée au circuit intégré, pour vérifier l'intégrité de cette mémoire.

Selon un mode de mise en oeuvre de la présente invention, la signature dépend du contenu d'une mémoire programme du circuit intégré.

Selon un mode de mise en oeuvre de la présente invention, la signature dépend du contenu d'un mémoire non-volatile du circuit intégré.

Selon un mode de mise en oeuvre de la présente invention, la quantité privée est une combinaison d'une première quantité représentant ladite signature des mémoires et d'une deuxième quantité obtenue, au moins partiellement, à partir d'un réseau de paramètres physiques, sensibles aux dispersions technologiques et de procédés de fabrication.

Selon un mode de mise en oeuvre de la présente invention, le réseau de paramètres physiques est programmé, au moins partiellement, par un mot fourni par un élément de mémorisation.

Selon un mode de mise en oeuvre de la présente invention, la procédure d'authentification est du type symétrique à partage de clé sans transmission de celle-ci.

Selon un mode de mise en oeuvre de la présente invention, la procédure d'authentification est de type à clés publiques et privées.

L'invention prévoit également un procédé d'authentification d'un dispositif électronique au moyen d'un dispositif externe tenant compte d'une quantité privée du dispositif électronique.

L'invention prévoit également un circuit intégré comportant une cellule d'extraction d'une quantité privée et des moyens de calcul d'une signature d'au moins une mémoire, contenue dans le circuit intégré ou associée à celui-ci, pour vérifier l'intégrité de la mémoire.

Selon un mode de réalisation de la présente invention, le circuit comporte des moyens pour la fourniture d'une quantité privée.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :

la figure 1 illustre, par un organigramme, un procédé d'authentification d'un circuit intégré mettant en oeuvre une quantité privée, auquel s'applique la présente invention ;

la figure 2 représente, sous forme de schémas blocs et de façon très schématique, un premier mode de réalisation d'un circuit d'extraction d'une quantité privée selon la présente invention ; et

la figure 3 représente, sous forme de schéma-blocs et de façon très schématique, un deuxième mode de réalisation préféré d'un circuit d'extraction d'une quantité privée selon la présente invention.

Pour des raisons de clarté, seules les étapes de procédé et les éléments du circuit qui sont nécessaires à la compréhension de l'invention ont été représentés aux figures et seront décrits par la suite. En particulier, les procédés d'authentification et les algorithmes ayant recours à des quantités privées sont parfaitement connus et ne seront pas détaillés, sauf en ce qui concerne la fourniture de la quantité privée faisant l'objet de l'invention.

Une caractéristique de la présente invention est de tenir compte, dans le procédé d'authentification, d'une signature du contenu d'au moins un des éléments de mémorisation du circuit intégré. Plus précisément, l'invention prévoit que la quantité privée de la puce soit fonction d'une signature de sa ou ses mémoires. Par signature, on entend un mot binaire représentatif du contenu même d'une ou plusieurs mémoires du circuit intégré.

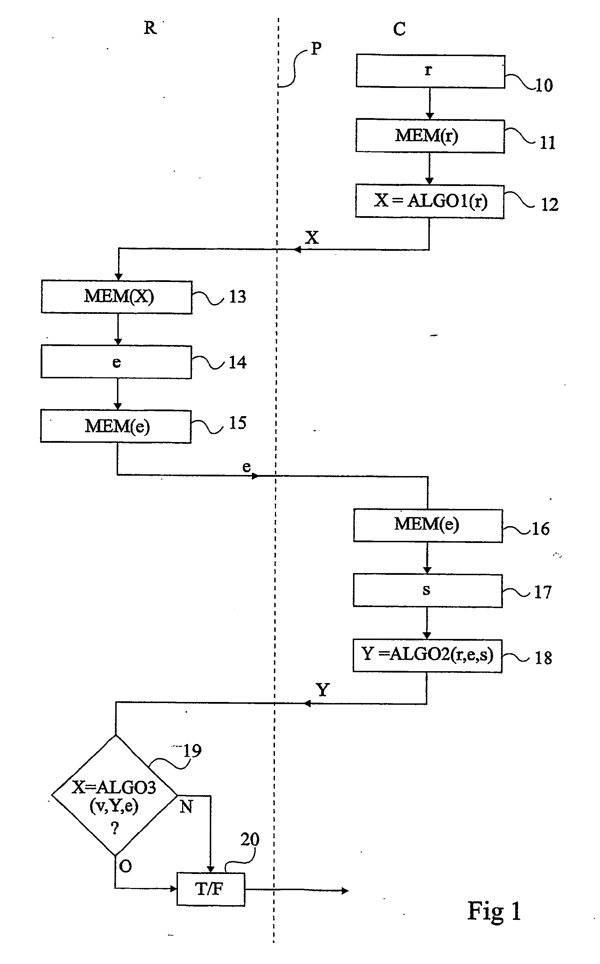

La figure 1 représente un organigramme simplifié illustrant un mode de mise en oeuvre d'une procédure d'authentification du type auquel s'applique la présente invention. Cet exemple concerne l'authentification d'une carte à puce par un dispositif externe. En figure 1, on a fait ressortir, de part et d'autre d'un pointillé P, les étapes de la procédure d'authentification se déroulant côté carte C, ou côté lecteur R.

Une phase d'authentification suit bien entendu l'introduction d'une carte dans le lecteur, l'envoi d'un identifiant par la carte au lecteur puis à un central, sa vérification par le central, puis l'extraction par ce central d'une quantité ou clé publique v à partir de l'identifiant communiqué par la carte. Cette clé publique provient, le plus souvent, d'une table de clés et est communiquée par le central au lecteur. Une telle procédure est caractéristique des procédés d'authentification dits, sans transmission de connaissance ou avec intervention d'un tiers de confiance.

Pour la phase d'authentification proprement dite, on commence par tirer aléatoirement, côté carte C, un nombre r (bloc 10). Ce nombre r est mémorisé (bloc 11, MEM (r)) dans le circuit intégré de la carte. Puis, on applique (bloc 12) à ce nombre r un premier algorithme ALGO1 fournissant un résultat X. Le résultat X est transmis au lecteur R qui le mémorise (bloc 13, MEM (X)). Côté lecteur, on tire un nombre aléatoire e (bloc 14) que l'on mémorise (bloc 15, MEM (e)). Ce nombre e est envoyé à la carte C qui elle-même le mémorise (bloc 16, MEM (e)).

La carte extrait alors sa quantité privée s (bloc 17). C'est à cette étape qu'intervient l'invention, en ce sens que la quantité privée s est fonction au moins d'une signature du contenu des mémoires de la carte. La quantité privée s est prise en compte dans un deuxième algorithme ALG02 (bloc 18) avec les données r et e pour fournir un résultat Y. De préférence, le nombre r est effacé après avoir été utilisé pour le calcul du nombre Y et avant l'envoi de ce dernier. Le résultat Y est envoyé au lecteur R qui vérifie (bloc 19) au moyen d'un troisième algorithme (ALG03) que la grandeur X est bien égale à l'application de cet algorithme aux grandeurs Y, e et v. La clé publique v est bien entendu fonction de la quantité ou clé privée s de la carte. Selon le résultat du test de cohérence 19, le lecteur fournit un indicateur d'authentification (T) ou d'absence d'authentification (F) à la carte (bloc 20). La procédure d'authentification est alors terminée.

Un procédé d'authentification tel que décrit en figure 1 est connu à l'exception du contenu de l'étape 17 où intervient l'invention pour que la quantité privée s prenne en compte au moins la signature d'au moins une mémoire, contenue dans le circuit intégré ou associée à celui-ci.

Selon un exemple particulier de réalisation, les différentes grandeurs sont liées entre elles par les algorithmes et relations suivantes :

les clés publiques v et privées s sont liées entre elles par la relation $v = g^{-s}$ modulo n, où g représente un générateur de groupe cyclique et n un nombre entier ;
le premier algorithme ALGO1 est $X = g^r$ modulo n ;
le deuxième algorithme ALGO2 est $Y = r + e.s$ ; et
le troisième algorithme ALGO3 est $X = g^Y.v^e$ modulo n.

On notera que divers algorithmes sont connus de la technique et pourront être mis en oeuvre en ayant recours au procédé de l'invention. Par exemple, la clé publique v pourra être calculée par le lecteur ou le central à partir de l'identifiant de la carte ou d'une donnée émise par cette dernière. Selon une autre variante, le lecteur pourra contenir une base de données des clés publiques des cartes qu'il est censé pouvoir lire.

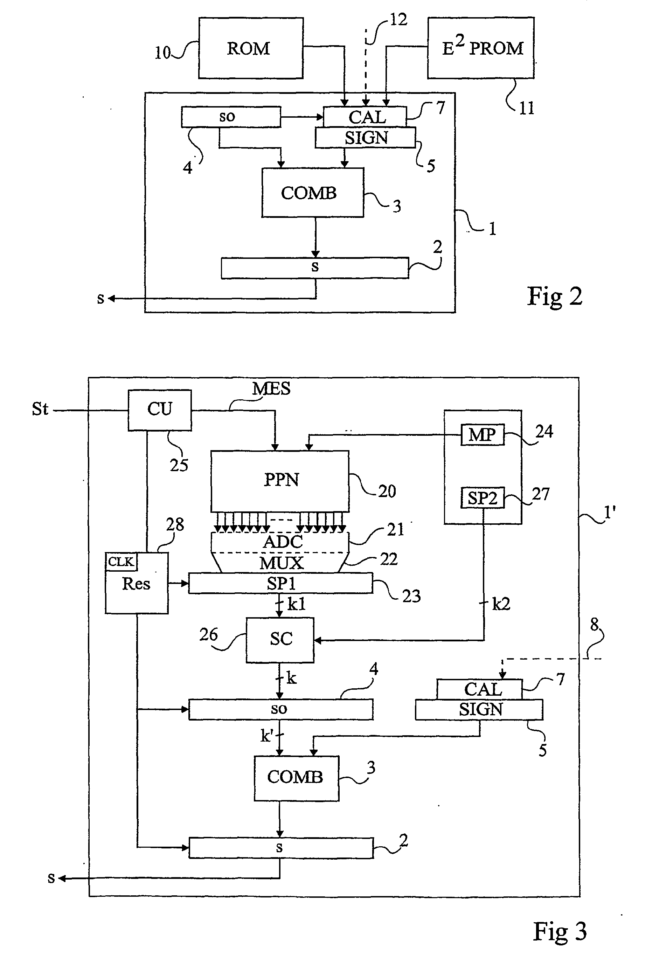

La figure 2 représente, de façon partielle et schématique, un premier mode de réalisation d'une cellule 1 d'extraction d'une quantité privée s dans un circuit intégré selon la présente invention.

La cellule 1 reçoit bien entendu des signaux de commande non représentés, notamment permettant de déclencher l'extraction de la quantité s, fournie sur une unique borne de sortie de la cellule 1. A l'intérieur de la cellule 1, le mot s représentant la quantité privée est stocké temporairement (à chaque demande d'extraction) dans un registre 2.

Selon l'invention, la quantité s est le résultat d'une combinaison (par une fonction quelconque) illustrée par le bloc 3 (COMB) d'une quantité secrète s0 et d'une signature SIGN du contenu des mémoires du circuit intégré. La quantité s0 est, au moins temporairement, stockée dans un registre 4 tandis que la signature SIGN est, au moins temporairement, stockée dans un registre 5. Les sorties des registres 4 et 5 sont envoyées au combineur 3 qui fournit la quantité s au registre 2.

La signature stockée dans le registre 5 est fonction du contenu d'au moins une mémoire du circuit intégré. Parmi ces mémoires dont une signature représentative du contenu pourra être prise en compte, seule ou en combinaison, pour la constitution du mot de signature SIGN, on trouve :

une mémoire 10 (ROM) contenant les programmes de traitement du circuit intégré (par exemple de la carte à puce) et notamment le programme lié au procédé d'authentification ;
une mémoire à lecture seule du type EEPROM 11 qui contient, entre autres, l'identifiant de la puce ;
le registre 4 ou mémoire contenant la quantité secrète s0 ; et
tout autre élément de mémorisation (symbolisé par une liaison d'accès 12) contenant des données ou programme immuables dans la vie du circuit intégré. Par immuables, on entend données ou programme(s) qui, par un calcul de signature, fourniront toujours le même résultat s'ils sont authentiques.

Un avantage de la présente invention est qu'elle permet, sans nécessiter de procédure d'authentification spécifique, de vérifier l'intégrité de données et/ou de programmes ne servant pas à l'authentification.

Un autre avantage de l'invention est que ce contrôle d'intégrité n'est pas effectué par la puce de circuit intégré, mais est effectué par le lecteur ou dispositif externe. En effet, la signature étant incorporée dans la quantité privée, c'est au lecteur qu'il incombe de vérifier que la quantité (Y, figure 1) qu'il reçoit de la puce est bien conforme à la clé publique qui lui a été transmise. Or, cette quantité Y dépend de la quantité privée s.

On notera que la clé publique a été certifiée par le "tiers de confiance" lors de la phase de personnalisation de la puce, donc à un moment où l'intégrité ne risque pas d'être remise en cause.

Le fait de recourir à un contrôle par le lecteur rend encore plus difficile un piratage éventuel.

En particulier, on aurait pu penser vérifier la signature d'un fichier ou d'une mémoire par rapport à une signature de référence contenue soit dans une mémoire de la puce soit dans le lecteur. Un inconvénient serait alors, pour le premier cas, qu'il faut connaître au moment de la fabrication (pour l'inclure dans les masques de fabrication de la puce de circuit intégré) les données que devra contenir la mémoire. De plus, cette solution conduit à une vérification côté carte à puce, ce qui est moins fiable. Pour la deuxième solution, cela nécessite que le lecteur dispose d'une table avec toutes les signatures possibles des cartes qu'il peut recevoir, ce qui en pratique conduit à des problèmes de capacité de mémoire évidents côté lecteur.

La signature (contenu du registre 5) fonction des différentes mémoires peut être obtenue avec n'importe quel procédé opératoire, pourvu que celui-ci délivre un mot de la taille choisie. Par exemple, il pourra s'agir d'une fonction de type somme de vérification (CHECKSUM) ou d'une fonction de hachage (par exemple, une fonction connue sous le nom SHA et décrite dans l'ouvrage "Applied Cryptography" de Bruce Schneier, paru en 1996 (deuxième édition par Wiley), pages 442 à 445). Le calcul de la signature SIGN est, par exemple, effectué par un bloc 7 (CAL) recevant des signaux des différentes mémoires à prendre en compte pour calculer le mot binaire SIGN. La fonction opérée par le bloc 7 peut être n'importe quelle combinaison, expansion, opération arithmétique, seule ou en combinaison. Plus généralement, la fonction de calcul de signature pourra être n'importe quelle fonction à "collision libre", c'est-à-dire pour laquelle une modification d'un bit d'entrée suffit à modifier la sortie. La représentation des figures est fonctionnelle. En pratique, on utilisera préférentiellement une unité centrale de commande pour déclencher et cadencer les lectures et calculs.

Un avantage de l'invention est que- sa mise en oeuvre ne requiert aucune modification des procédés d'authentification classiques, pourvu que l'extraction de la quantité s, faite selon l'invention, fournisse une quantité de longueur attendue ou compatible avec le procédé et/ou circuit d'authentification qui l'exploite.

Un autre avantage de la présente invention est que le test d'authenticité effectué en tenant compte de la signature des mémoires ne donne aucune indication quant à la nature d'un défaut éventuel. Cela rend encore plus difficile la détection de la quantité privée par un pirate éventuel.

Un autre avantage de l'invention est que les mémoires (notamment la mémoire programme) peuvent désormais être, sans risque d'attaque par modification de leurs contenus, placées à l'extérieur du circuit intégré sous réserve que la seule lecture des données n'apporte rien au pirate. En effet, un pirate ne pourra alors pas mettre à profit cette externalisation dans la mesure où toute modification sera détectée par la signature.

La figure 3 représente un deuxième mode de réalisation d'une cellule 1' d'extraction d'une quantité privée s dans un circuit intégré selon la présente invention. La cellule 1' comporte ici un réseau de paramètres physiques 20 (PPN) lié à la fabrication de la puce de circuit intégré. Ce réseau de paramètres physiques -20 fournit un grand nombre de signaux qui participent à la génération de la quantité privée s0 selon l'invention.

On pourra recourir à n'importe quel réseau de paramètres physiques consistant, par exemple, à mesurer des paramètres électriques. I1 peut s'agir, par exemple, d'une mesure d'une tension seuil d'un transistor, d'une mesure d'une résistance ou d'une mesure de capacité parasite, d'une mesure de courant produite par une source de courant, d'une mesure de constante de temps (par exemple, un circuit RC), d'une mesure d'une fréquence d'oscillation, etc. Comme ces caractéristiques sont sensibles aux dispersions technologiques et de procédés de fabrication, on peut considérer que le ou les paramètres électriques pris en compte sont propres à une fabrication et constituent une signature des circuits intégrés issus de cette fabrication.

Dans l'exemple d'une mesure de paramètres électriques, les signaux issus du réseau 20 sont convertis en signaux numériques au moyen d'un convertisseur analogique-numérique 21 (ADC), et sont le cas échéant multiplexés par un multiplexeur 22 (MUX), pour constituer un mot binaire SP1 stocké dans un registre 23. Le mot SP1 est donc sensible aux dispersions technologiques et de procédé de fabrication et représente la signature matérielle de la puce.

Le convertisseur 21 et le multiplexeur 22 ont été représentés en pointillés car il s'agit d'éléments optionnels. En particulier, le convertisseur 21 pourra être omis dans un mode de réalisation d'un réseau de paramètres physiques délivrant directement un mot numérique.

De préférence, les paramètres électriques mesurés au moyen du réseau 20 ne sont pas toujours les mêmes. Celui-ci est alors programmable. Il est paramétré ou configuré à chaque mesure à partir d'un mot binaire MP, stocké dans un registre 24. Le mot MP est propre à la puce de circuit intégré et peut être individualisé d'une carte à une autre.

La mesure des paramètres physiques est déclenchée par un signal MES issu d'une unité de commande 25 (CU) de la cellule 1'. Le mot SP1 est fourni à un combineur 26 (SC) recevant également un mot binaire SP2 stocké dans un registre 27. Le rôle du circuit 26 est de combiner les mots SP1 et SP2 pour fournir la quantité secrète s0, stockée dans le registre 4. A titre d'exemple particulier de réalisation, la combinaison opérée par le combineur 26 peut être du type :

$$s = ((SP1 - SP2)^2 + (SP1 + SP2)^2)^2 \text{ modulo } q,$$

où q est un nombre premier sur k bits. Le nombre s0 est alors un nombre de k bits obtenu à partir des mots SP1 et SP2 respectivement sur k1 et k2 bits. De préférence, les nombres k1 et k2 de bits des mots SP1 et SP2 sont égaux. Cela permet de garder l'égalité de difficulté à un pirate éventuel pour le cas où une partie SP1 ou SP2 du mot s0 viendrait à être découverte.

Comme le nombre MP, le nombre SP2 est différent d'une carte à l'autre. Le combineur 26 garantit la taille de la quantité s0 et une valeur non nulle. Le recours à une quantité SP2 propre à la carte garantit que la clé privée s0 soit unique quelle que soit la quantité MP fournie au réseau de paramètres physiques 20 pour le configurer.

La réalisation d'un réseau de paramètres physiques est parfaitement classique et ne fait pas l'objet de la présente invention. Il pourra s'agir, par exemple, d'un réseau de résistances et/ou de capacités commutables associées en parallèle et/ou en série, les commutateurs étant commandés en fonction des signaux de configuration MP arrivant sur le réseau 20. On pourra également recourir à des circuits faisant appel à une mesure temporelle. Par exemple, on mesure le temps de lecture/écriture d'une mémoire de type EEPROM. Un exemple de réseau de paramètres physiques de ce type est décrit dans le brevet américain n° 5 818 738.

La cellule 1' comporte également, comme la cellule 1 de la figure 2, un combineur 3 de la quantité s0 avec une signature SIGN contenue dans le registre 5. Cette signature SIGN est calculée par le bloc 7 (CAL). En figure 3, on a fait figurer la prise en compte du contenu de mémoires externes à la cellule 1'. Toutefois, le contenu du registre 4 contenant la quantité s0 pourra, là encore, être pris en compte dans la signature.

Selon le mode de réalisation préféré illustré par la figure 3, la cellule 1' comporte en outre un circuit 28 de réinitialisation (RES, remise à zéro ou à un) de certains de ses registres. Le circuit 28 a notamment pour rôle de rendre temporaire la présence des quantités s et s0 dans les registres 2 et 4. Pour garantir une sécurité optimale, le circuit 28 commande la réinitialisation non seulement des registres 4 et 2, mais également du registre 23 contenant la quantité SP1 extraite du réseau 20 et du registre 5 contenant la signature SIGN des mémoires. En d'autres termes, on fixe la durée de vie de la quantité privée s et/ou de ses constituants à partir de sa génération.

Un avantage de l'invention selon ce mode de réalisation est qu'en combinant le recours à un réseau de paramètres physiques et/ou à une signature des mémoires pour conditionner au moins une partie de la quantité privée, à une réinitialisation temporisée des éléments de mémorisation stockant cette quantité privée, on empêche à un pirate éventuel de découvrir la quantité privée de la carte par un examen par exemple visuel.

La combinaison des paramètres MP et SP2 conditionnant l'obtention de la quantité s0 augmente la difficulté de piratage. On notera toutefois que le recours à une telle combinaison est optionnel. Le circuit 28 est, par exemple, commandé par une horloge CLK déclenchée par l'unité de commande 25 à l'arrivée d'un signal St de déclenchement de l'extraction de la quantité privée s.

Selon un mode de réalisation de l'invention, appliqué au cas où un code est saisi par l'utilisateur de la carte, ce code peut être stocké, de manière directe ou modifiée, dans le registre 27 pour constituer le code SP2. Dans ce cas, le circuit 28 peut également remettre à zéro le registre 27 pour empêcher la présence permanente du code SP2 sur la carte.

Bien entendu, la présente invention est susceptible de diverses variantes et modifications qui apparaîtront à l'homme de l'art. En particulier, bien que l'invention ait été décrite en relation avec un procédé d'authentification particulier, celle-ci s'applique quelle que soit la procédure d'authentification envisagée, pourvu que cette procédure n'engendre pas de contraintes particulières (autre que de longueur) sur l'obtention de la quantité privée.

A titre d'exemple, on pourra utiliser un protocole dit de SCHNORR décrit, par exemple, dans l'ouvrage "Applied Cryptography" susmentionné, pages 510 à 512, ou dans le document US-A-4 995 082.

De plus, on a fait référence à des registres de stockage qui pourront être remplacés par tout élément de mémorisation adapté, par exemple, des mémoires ou des parties de mémoire volatiles ou non selon le type de données stockées. En outre, l'écriture et la lecture dans ces éléments de mémorisation pourront être série ou parallèle.

Enfin, bien que la mise en oeuvre de l'invention ait été décrite en relation avec un exemple matériel, celle-ci pourra s'effectuer de façon logicielle, sa mise en oeuvre pratique étant à la portée de l'homme du métier à partir des indications fonctionnelles données ci-dessus.

## Revendications

**1.** Procédé de fourniture d'une quantité privée (s) dans un circuit intégré participant à une procédure d'authentification au moyen d'un dispositif externe tenant compte de cette quantité privée, **caractérisé en ce que**, pour vérifier l'intégrité d'au moins une mémoire (4, 10, 11, 12) associée au circuit intégré, cette quantité privée est une combinaison d'une première quantité représentant une signature (SIGN) de ladite mémoire et d'une deuxième quantité (s0) obtenue, au moins partiellement, à partir d'un réseau de paramètres physiques (20), sensibles aux dispersions technologiques et de procédés de fabrication.

**2.** Procédé selon la revendication 1, **caractérisé en ce que** la signature (SIGN) dépend du contenu d'une mémoire programme (10) du circuit intégré.

**3.** Procédé selon la revendication 1 ou 2, **caractérisé en ce que** la signature (SIGN) dépend du contenu d'un mémoire non-volatile (11) du circuit intégré.

**4.** Procédé selon l'une quelconque des revendications 1 à 3, **caractérisé en ce que** le réseau de paramètres physiques (20) est programmé, au moins partiellement, par un mot (MP) fourni par un élément de mémorisation (24).

**5.** Procédé selon l'une quelconque des revendications 1 à 4, **caractérisé en ce que** la procédure d'authentification est du type symétrique à partage de clé sans transmission de celle-ci.

6. Procédé selon la revendication 5, **caractérisé en ce que** la procédure d'authentification est de type à clés publiques et privées.

7. Procédé d'authentification d'un dispositif électronique au moyen d'un dispositif externe tenant compte d'une quantité privée du dispositif électronique, **caractérisé en ce que** ladite quantité privée (s) est obtenue par la mise en oeuvre d'un procédé de fourniture selon l'une quelconque des revendications 1 à 6.

8. Circuit intégré comportant une cellule (1, 1') d'extraction d'une quantité privée (s), **caractérisé en ce qu'**il comporte des moyens de calcul d'une signature (SIGN) d'au moins une mémoire (4, 10, 11, 12), contenue dans le circuit intégré ou associée à celui-ci, et des moyens d'extraction d'une quantité à partir d'un réseau de paramètres physiques du circuit intégré sensibles aux dispersions technologiques et de procédés de fabrication.

9. Circuit intégré selon la revendication 8, **caractérisé en ce qu'**il comporte des moyens pour la fourniture d'une quantité privée selon l'une quelconque des revendications 1 à 6.

**Claims**

1. A method for providing a private quantity (s) in an integrated circuit taking part in an authentication procedure by means of an external device taking into account this private quantity, **characterized in that**, to check the integrity of at least one (4, 10, 11, 12) associated with the integrated circuit, this private quantity is a combination of a first quantity representing a signature (SIGN) of said memory and of a second quantity (s0) obtained, at least partially, from a physical parameter network (20) sensitive to dispersions of the technology and of the manufacturing method.

2. The method of claim 1, wherein the signature (SIGN) depends on the content of a program memory (10) of the integrated circuit.

3. The method of any of claim 1 or 2, wherein the signature (SIGN) depends on the content of a non-volatile memory (11) of the integrated circuit.

4. The method of any of claims 1 to 3, wherein the physical parameter network (20) is programmed, at least partially, by a word (MP) provided by a storage element (24).

5. The method of any of claims 1 to 4, wherein the authentication procedure is of symmetrical type, sharing a key with no transmission thereof.

6. The method of claim 5, wherein the authentication method is of a type with public and private keys.

7. A method for authenticating an electronic device by means of an external device taking a private quantity of the electronic device into account, **characterized in that** said private quantity (s) is obtained by the implementation of the method of any of claims 1 to 6.

8. An integrated circuit comprising a cell (1, 1') for extracting a private quantity (s); **characterized in that** it includes means for calculating a signature (SIGN) of at least one memory (4, 10, 11, 12), contained in the integrated circuit or associated therewith, and means for extracting a quantity from a physical parameter network of the integrated circuit sensitive to dispersions of the technology and of the manufacturing method.

9. The integrated circuit of claim 8, including means for providing of a private quantity according to any of claims 1 to 6.

**Patentansprüche**

1. Ein Verfahren zum Vorsehen einer geheimen Quantität (s) in einer integrierten Schaltung, die in einer Authentifizierungsprozedur stattfindet, und zwar durch Mittel eines externen Geräts unter Berücksichtigung dieser geheimen Quantität, **dadurch gekennzeichnet, dass** um die Integrität von wenigstens einem Speicher (4, 10, 11, 12) assoziiert mit der integrierten Schaltung zu prüfen, wobei diese geheime Quantität eine Kombination einer ersten Quantität darstellend für eine Signatur (SIGN) des Speichers und einer zweiten Quantität (s0) die wenigstens teilweise erlangt wird von einem Netzwerk für physikalische Parameter (20) sensitiv für technologische Dispersionen bzw. Streuungen und für das Herstellungsverfahren.

2. Verfahren nach Anspruch 1, wobei die Signatur (SIGN) von dem Inhalt eines Programmspeichers (10) der integrierten Schaltung abhängt.

3. Verfahren nach einem der Ansprüche 1 oder 2, wobei die Signatur (SIGN) von dem Inhalt eines nicht-flüchtigen Speichers (11) der integrierten Schaltung abhängt.

4. Verfahren nach einem der Ansprüche 1 bis 3, wobei das Netzwerk für physikalische Parameter (20) programmiert ist, wenigstens teilweise, mit einem Wort (MP), das von einem Speicherelement (24) vorgesehen ist.

5. Verfahren nach einem der Ansprüche 1 bis 4, wobei die Authentifizierungsprozedur von symmetrischer Art ist, und zwar basierend auf dem Teilen eines Schlüssels, und zwar ohne Übertragung.

6. Verfahren nach Anspruch 5, wobei das Authentifizierungsverfahren von einem Typ mit öffentlichen und geheimen Schlüsseln ist.

7. Ein Verfahren zum Authentifizieren eines elektronischen Geräts durch Mittel eines externen Geräts, das eine geheime Quantität des elektronischen Geräts berücksichtigt, **dadurch gekennzeichnet, dass** die geheime Quantität (s) erlangt wird durch die Implementierung des Verfahrens von einem der Ansprüche 1 bis 6.

8. Eine integrierte Schaltung, das eine Zelle (1, 1') aufweist, und zwar zum Extrahieren einer geheimen Quantität (s); **dadurch gekennzeichnet, dass** es Mittel zum Berechnen einer Signatur (SIGN) von wenigstens einem Speicher (4, 10, 11, 12), enthalten in der integrierten Schaltung oder assoziiert damit beinhaltet und Mittel zum Extrahieren einer Quantität von einem Netzwerk für physikalische Parameter der integrierten Schaltung sensitiv für technologische Dispersionen bzw. Streuungen und für das Herstellungsverfahren beinhaltet.

9. Integrierte Schaltung nach Anspruch 8, einschließlich Mittel zum Vorsehen einer geheimen Quantität gemäß einem der Ansprüche 1 bis 6.

R                                    C

P

$$r \quad \sim 10$$

$$MEM(r) \quad \sim 11$$

$$X = ALGO1(r) \quad \sim 12$$

X

$$MEM(X) \quad \sim 13$$

$$e \quad \sim 14$$

$$MEM(e) \quad \sim 15$$

e

$$MEM(e) \quad \sim 16$$

$$s \quad \sim 17$$

$$Y = ALGO2(r,e,s) \quad \sim 18$$

Y

$$\begin{array}{c} X = ALGO3 \\ (v,Y,e) \\ ? \end{array} \quad \sim 19$$

N

O

$$T/F \quad \sim 20$$

Fig 1

Fig 2

Fig 3

## RÉFÉRENCES CITÉES DANS LA DESCRIPTION

**Documents brevets cités dans la description**

- FR 2716058

- US 4995082 A

**Littérature non-brevet citée dans la description**

- **BRUCE SCHNEIER.** Applied Cryptography. Wiley, 1996, 442-445

- SCHNORR. *Applied Cryptography,* 510-512